# EUROPÄISCHE PATENTSCHRIFT

(11) **EP 0 826 552 B1**
(45) Veröffentlichungstag und Bekanntmachung des Hinweises auf die Patenterteilung: **24.07.2002**
(21) Anmeldenummer: 97115219.4
(22) Anmeldetag: 03.09.1997
(51) Int. Cl.: B60N 2/28

(54) **Windschutzvorrichtung für einen Kindersitz**
Wind barrier for a children seat
Pare-vent pour siège d'enfant

(30) Priorität: 03.09.1996 DE 29615302 U
(43) Veröffentlichungstag der Anmeldung: 04.03.1998
(73) Patentinhaber: Hofmann, Thomas, 88605 Menningen (DE)
(72) Erfinder: Hofmann, Thomas, 88605 Menningen (DE)
(74) Vertreter: Patentanwälte Ruff, Wilhelm, Beier, Dauster & Partner

(56) Entgegenhaltungen:
- DE-U- 9 006 091
- FR-A- 2 724 608
- US-A- 5 522 639

## Beschreibung

Die Erfindung betrifft eine Windschutzvorrichtung für einen in einem Kraftfahrzeug in Fahrtrichtung ausrichtbaren Kindersitz mit einer dem Kindersitz zustellbaren Schutzhaube.

Kindersitze für Kraftfahrzeuge sind allgemein bekannt. Ein solcher Kindersitz kann entweder in einem Kraftfahrzeug integriert sein, oder aber mit Hilfe von fahrzeugfesten Sicherheits- oder Befestigungsgurten in dem Kraftfahrzeug montierbar sein. Wenn ein solcher Kindersitz in einem Personenkraftwagen mitgeführt wird, der eine zumindest teilweise bewegliche Dachkonstruktion, insbesondere in Form eines Cabriolets, aufweist, so kann in der Regel die entsprechende Dachkonstruktion während des Zeitraums, währenddessen der Kindersitz durch ein Kind besetzt ist, nicht geöffnet werden. Bei geöffneter Dachkonstruktion - bei einem Cabriolet somit bei geöffnetem Verdeck - würden auf das im Kindersitz befindliche Kind so starke Windströmungen einwirken, daß die Gesundheit des Kindes beeinträchtigt werden könnte.

Aus der DE 90 06 091 U1 ist es zu diesem Zweck bereits bekannt, dem Kindersitz eine Schutzhaube in Form einer Leichtmetallklappkonstruktion zuzuordnen, die mit einem Folienbezug überspannt ist. Das so gebildete Schutzverdeck kann vollständig vor die Sitzposition des Kindes im Kindersitz aufgefächert werden, wodurch die entsprechende Schutzfunktion gegen Windströmungen und zusätzlich gegen Sonneneinstrahlung erzielt wird. Um Zugriff auf das Kind zu bekommen, muß das Schutzverdeck hochgeklappt werden. Anschließend kann das Schutzverdeck wieder in seine Schutzposition vor das Kind zurückgeklappt werden, wodurch das Schutzverdeck die Sitzposition des Kindes im wesentlichen vollständig einkapselt. Der dünne Folienbezug, der die Leichtmetallklappkonstruktion überspannt, kann insbesondere bei höheren Fahrtgeschwindigkeiten zu unangenehmen Windgeräuschen führen und kann in Einzelfällen sogar beschädigt werden.

Aufgabe der Erfindung ist es, eine Windschutzvorrichtung der eingangs genannten Art zu schaffen, die zum einen eine erleichterte Zugriffsmöglichkeit auf die Sitzposition des Kindes und zum anderen einen problemlosen Einsatz auch bei höheren Fahrtgeschwindigkeiten des Kraftfahrzeugs ermöglicht.

Diese Aufgabe wird dadurch gelöst, daß die Schutzhaube einen den Kindersitz oben über seine Breite überspannenden Kopfteil, zwei bündig an den Kopfteil anschließende und den Kindersitz außen zumindest über einen Teil seiner Höhe seitlich flankierende Seitenteile sowie einen sich hinter dem Kindersitz bündig zwischen dem Kopfteil und den Seitenteilen erstreckenden Rückteil aufweist, wobei sowohl die Seitenteile als auch der Kopfteil und der Rückteil als zumindest weitgehend formstabile Flächengebilde gestaltet sind, und daß die Schutzhaube mit einem Traggestell versehen ist, das fahrzeugfest oder kindersitzfest montierbar ist. Die so gebildete Schutzhaube ist vom Kindersitz aus nach vorne vollständig offen, so daß ohne weiteres Zugriffsmöglichkeiten auf die Sitzposition des Kindes im Kindersitz gegeben sind. Das Kind ist im Kindersitz nicht abgekapselt, sondern kann mit auf den Frontsitzen befindlichen Personen kommunizieren, falls der Kindersitz im Fondsitzbereich befestigt ist. Durch die nach vorne offene Gestaltung der Schutzhaube wird dem Kind auch nicht das subjektive Gefühl vermittelt, im Kindersitz isoliert zu sein. Trotz der nach vorne offenen Gestaltung ist die Sitzposition des Kindes überraschenderweise vollkommen windgeschützt. Dadurch, daß die Schutzhaube den Kindersitz außen umgibt und ein eigenes Traggestell aufweist, kann die Schutzhaube für alle Arten von Kindersitzen eingesetzt werden, ohne daß am Traggestell oder an den Flächengebilden für unterschiedliche Kindersitzarten Modifikationen vorgenommen werden müssen. Die Schutzhaube ist somit auch für im Fahrzeug integrierte Kindersitze einsetzbar. Die Schutzhaube, d.h. der Kopfteil, die Seitenteile und der Rückteil sowie das Traggestell können als einstückiges Bauteil gestaltet sein, oder auch - wie nachfolgend beschrieben werden wird - aus mehreren Bauteilen zu einer Baueinheit zusammengefügt sein. Die zumindest weitgehende Formstabilität der Flächengebilde schafft für sich oder in Verbindung mit dem Traggestell die hohe Stabilität der Schutzhaube, wobei auch bei hohen Fahrtgeschwindigkeiten des Kraftfahrzeugs keine störenden Luftströmungen im Bereich der Sitzposition des Kindersitzes auftreten.

In Ausgestaltung der Erfindung sind der Kopfteil, die Seitenteile und der Rückteil an dem Traggestell festgelegt. Durch die Festlegung der Flächengebilde an dem Traggestell wird zum einen eine einfache Herstellung der verschiedenen Bauteile der Schutzhaube erzielt. Zum anderen wird dennoch eine äußerst stabile, eine Baueinheit bildende Schutzhaubenkonstruktion geschaffen, die auch bei hohen Fahrtgeschwindigkeiten ihre Schutzfunktion vollständig erfüllt und keine Windgeräusche verursacht.

In weiterer Ausgestaltung der Erfindung bestehen die Flächengebilde aus einem transparenten Kunststoffmaterial. Dadurch wird der offene Charakter der Schutzhaube noch verstärkt und das Sichtfeld des Kindes auch zu den Seiten und nach oben hin nicht eingeschränkt.

In weiterer Ausgestaltung der Erfindung sind die Seitenteile und der Kopfteil als ein einstückiges, bogenförmig gekrümmtes Flächengebilde gestaltet. Dadurch wird die Herstellung der Schutzhaube vereinfacht.

In weiterer Ausgestaltung der Erfindung sind die Flächengebilde mit Hilfe von lösbaren Befestigungsmitteln an dem Traggestell festlegbar. Dadurch wird eine einfache Austauschbarkeit der Flächengebilde erreicht. So können je nach Wunsch entsprechend unterschiedlich farbig getönte Flächengebilde montiert werden.

In weiterer Ausgestaltung der Erfindung sind als lösbare Befestigungsmittel Druckknopfanordnungen vorgesehen. Dies ist eine besonders einfache und funktionssichere Befestigungsart, die keine zusätzlichen Werkzeuge benötigt.

In weiterer Ausgestaltung der Erfindung sind im Bereich der Seitenteile Aussparungen zur Hindurchführung eines fahrzeugseiten Sicherheitsgurtes für den Kindersitz vorgesehen. Mit dieser Ausgestaltung wird der Möglichkeit Rechnung getragen, ein Kind in einem Kindersitz durch einen fahrzeugseitigen Dreipunkt-Sicherheitsgurt gegebenenfalls in Verbindung mit einem Fangtisch zu sichern, ohne daß der Dreipunktgurt umgelenkt werden muß.

In weiterer Ausgestaltung der Erfindung sind die Kanten der Aussparungen abgerundet. Dadurch werden Beschädigungen des Dreipunkt-Sicherheitsgurtes während des angelegten Funktionszustandes vermieden.

In weiterer Ausgestaltung der Erfindung ist das Traggestell mit einem entsprechend den Rändern der Flächengebilde verlaufenden Rohrrahmen versehen. Dieser Rohrrahmen bildet somit eine umlaufende Stützung für die Flächengebilde, wodurch die Stabilität der Schutzhaube weiter erhöht wird.

In weiterer Ausgestaltung der Erfindung sind der Schutzhaube Justiermittel zur Höhenverstellung der Schutzhaube realtiv zu dem Fahrzeugsitz oder dem Kindersitz zugeordnet. Dadurch ist es möglich, die Schutzhaube an unterschiedliche Sitzpositionen und/oder verschiedene Altersstufen und Größen von Kindern anzupassen. Bei einer bevorzugten Ausführungsform ist eine Rückenlehne des Fahrzeugsitzes von zwei in Fahrzeughochrichtung parallel zueinander verlaufenden, lösbar angeordneten Riemen umschlossen, an denen die gesamte Schutzhaube, insbesondere mittels ihres Traggestells, höhenverstellbar gehalten ist. Dabei durchlaufen die Riemen entsprechende Ösen oder Aufnahmen an der Schutzhaube, wobei eine Lockerung der Riemen ein Verschieben der Schutzhaube in Fahrzeughochrichtung längs der Rückenlehne ermöglicht. Ein anschließendes Straffen der Riemen bewirkt ein zwangsläufiges Festsetzen der Schutzhaube in der gewünschten Höhenposition durch Kraftschluß und durch Anpressen an die Rückenlehne.

In weiterer Ausgestaltung der Erfindung ist das Traggestell aus wenigstens zwei Gestellteilen, insbesondere Rohrabschnitten lösbar zusammengefügt. Bei einer bevorzugten Ausführungsform ist das Traggestell aus mehreren Rohrabschnitten mittels Steckverbindungen zusammengefügt, wobei den Steckverbindungen ergänzend formschlüssige Arretierungen für die zusammengesteckte Endposition der Rohrabschnitte zugeordnet sein können. Durch die beschriebene Ausgestaltung kann das relativ sperrige Traggestell auf eine handliche Größe zerlegt und bei Nichtbedarf an geeigneter Stelle im Kraftfahrzeug verstaut werden.

Weitere Vorteile und Merkmale der Erfindung ergeben sich aus den Unteransprüchen. Nachfolgend werden bevorzugte Ausführungsbeispiele der Erfindung beschrieben und anhand der Zeichnungen dargestellt.
- Fig. 1: zeigt in perspektivischer Darstellung ein Cabriolet mit geöffnetem Verdeck, auf dessen Fondsitzbank ein mit einer Ausführungsform einer erfindungsgemäßen Windschutzvorrichtung versehener Kindersitz montiert ist,
- Fig. 2: in vergrößerter perspektivischer Darstellung die den Kindersitz umschließende Windschutzvorrichtung nach Fig. 1,
- Fig. 3: in einer perspektivischen Explosionsdarstellung die Windschutzvorrichtung nach den Fig. 1 und 2, die aus einem Traggestell und einer Schutzhaube zusammengesetzt ist und
- Fig. 4: eine weitere Ausführungsform einer Windschutzvorrichtung für einen Kindersitz ähnlich den Fig. 1 bis 3, bei der die Sitzposition des Kindes durch einen Dreipunkt-Sicherheitsgurt gesichert ist.

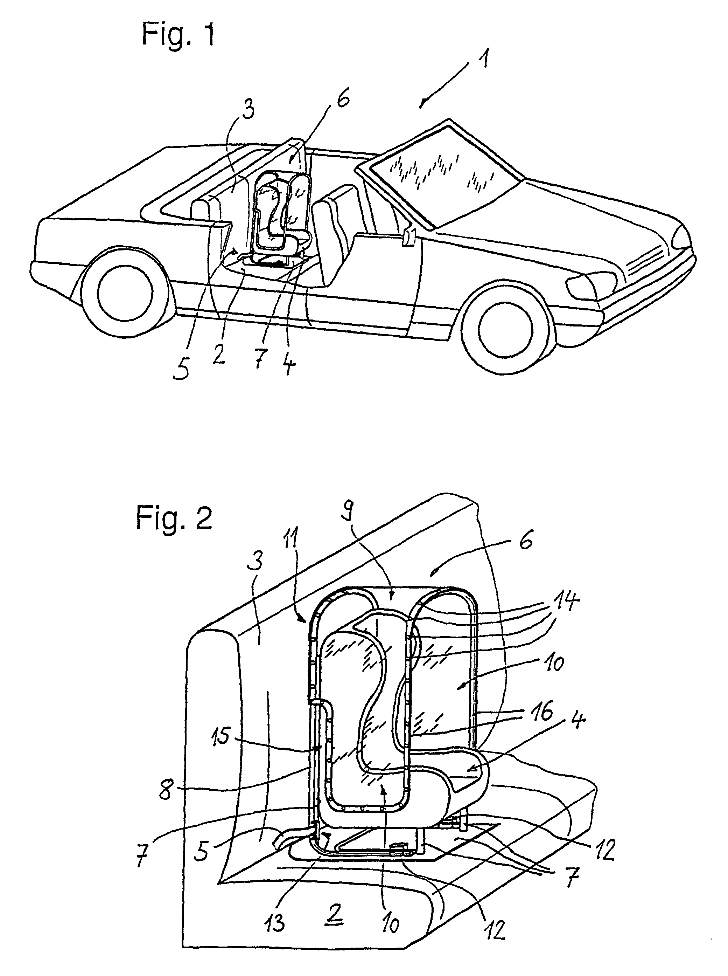

Ein Cabriolet 1 nach Fig. 1, das mit geöffnetem Verdeck dargestellt ist, weist in einem Fahrgastraum einen fahrerseitigen und einen beifahrerseitigen Frontsitz auf, hinter denen eine Fondsitzbank 2, 3 angeordnet ist. Die Fondsitzbank 2, 3 setzt sich aus einem Sitzflächenteil 2 und einem Rückenlehnenteil 3 zusammen. Auf der Fondsitzbank 2, 3 ist ein Kindersitz 4 montiert, der ein mit einer Auflageplatte versehenes Gestell 7 aufweist, das mittels fahrzeugfester Gurte 5 auf der Fondsitzbank 2, 3 festgelegt ist. Zur Sicherung eines Kindes in der Sitzposition im Kindersitz 4 weist der Kindersitz 4 nicht dargestellte, kindersitzfeste Sicherheitsgurte auf.

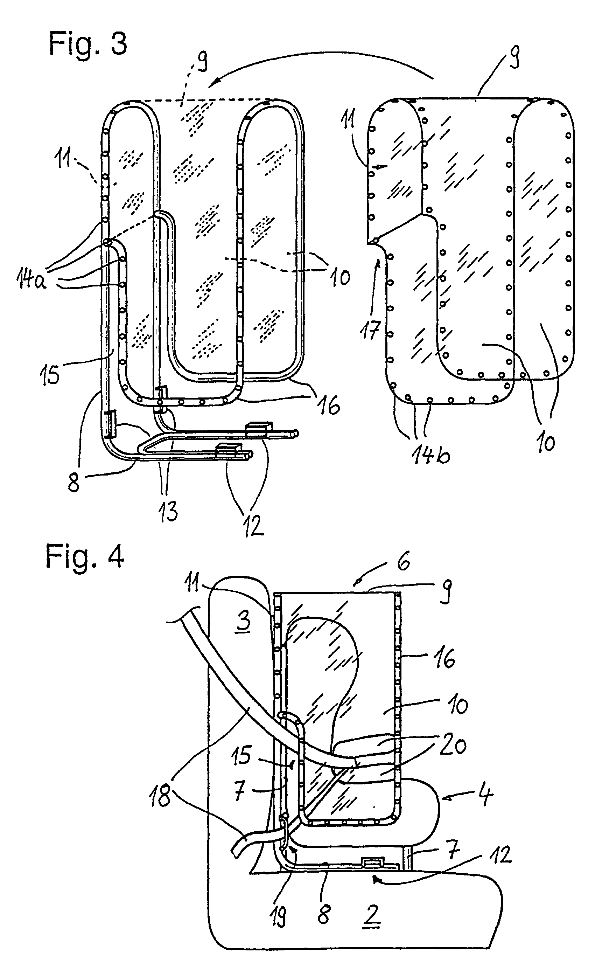

Dem Kindersitz 4, 7 ist eine Windschutzvorrichtung 6 zugeordnet, die aus einer Schutzhaube 9, 10, 11 und einem Traggestell 8, 16 zusammengesetzt ist. Die Windschutzvorrichtung 6 ist derart dimensioniert, daß sie den Kindersitz 4, 7 außen umschließt. Das Traggestell 8, 16 ist als Rohrkonstruktion aus Leichtmetall, insbesondere Aluminium, gestaltet und weist gemäß Fig. 3 einen rückseitigen, vertikal ausgerichteten Bügel 8 auf, dessen Schenkel nach unten in horizontale Stützabschnitte übergehen. Die horizontalen Stützabschnitte sind durch einen Verstärkungsbügel miteinander verbunden. Der Abstand der vertikalen Schenkel des rückseitigen Bügels 8 des Traggestells 8, 16 ist derart auf die rückseitigen Tragstangen des Gestells 7 des Kindersitzes 4 abgestimmt, daß der vertikale Bügel 8 des Traggestells 8, 16 an diesen Tragstangen befestigbar ist. Dazu sind an den Schenkeln des Bügels 8 Befestigungsaufnahmen 13 vorgesehen, die mittels lösbarer Befestigungselemente an korrespondierenden Befestigungsaufnahmen des Gestells 7 festlegbar sind. Vorteilhaft sind die Befestigungsaufnahmen 13 derart gestaltet, daß die fahrzeugfesten Gurte 5 neben der Festlegung des Kindersitzes 4 gleichzeitig auch das Traggestell 8, 16 und damit die Windschutzvorrichtung 6 an der Fondsitzbank 2, 3 festlegen. Auch die horizontalen Stützabschnitte weisen Befestigungsaufnahmen 12 auf, die mit Hilfe von lösbaren Befestigungselementen an korrespondierenden, jedoch nicht dargestellten Befestigungsaufnahmen im Bereich der Grundplatte des Gestells 7 festlegbar sind.

Von dem rückseitigen Bügel 8 des Traggestells 8, 16 ragt ein geschwungener Rohrrahmen 16 nach vorne ab, der zwei an jeden Schenkel des Bügels 8 ansetzende vertikale Rahmenabschnitte aufweist, die unter Belassung einer Aussparung 15 zu dem jeweils zugeordneten Schenkel des Bügels 8 parallel zu diesen nach unten geführt sind und in zwei horizontale Rahmenabschnitte übergehen, die parallel zu den unteren Stützabschnitten des Bügels 8 nach vorne geführt sind. Die vertikalen Rahmenabschnitte, die die nach unten offenen Aussparungen 15 begrenzen, setzen etwa auf zwei Drittel der Höhe des Tragbügels 8 an diesen an. Die horizontalen Rahmenabschnitte gehen in zwei nach oben ragende vertikale Schenkel eines Bügelabschnittes über, der parallel zu dem Tragbügel 8 verläuft und die vordere Begrenzung des Traggestells 8, 16 darstellt. Auf den nach außen gerichteten Seiten des Rohrrahmens 16 und des oberen Bereiches des Tragbügels 8 sind in gleichmäßigen Abständen mehrere Druckknopfelemente 14a angeordnet, wobei bei anderen erfindungsgemäßen Ausführungsbeispielen eine gegenüber den Darstellungen nach den Fig. 2 bis 4 erheblich reduzierte Anzahl von Druckknopfelementen vorgesehen ist.

Die Schutzhaube 9, 10, 11 besteht beim dargestellten Ausführungsbeispiel aus einem einstückigen, im wesentlichen formstabilen Flächengebilde, das aus einem transparenten Kunststoffmaterial, insbesondere Plexiglas, hergestellt ist. Das Flächengebilde wird aus zwei vertikalen Seitenteilen gebildet, die den Kindersitz 4 seitlich flankieren und wenigstens bis auf Höhe von Armlehnen des Kindersitzes 4 nach unten gezogen sind. Die Seitenteile 10 sind eben gestaltet. Die Seitenteile 10 sind zur Rückseite hin mit einer abgerundeten Abstufung 17 versehen, die die Aussparungen 15 des Traggestells 8, 16 freihalten. Die Seitenteile 10 gehen nach oben fließend in einen bogenförmigen Kopfteil 9 über, der als im wesentlichen zylindermantelabschnittartig gekrümmtes Flächengebilde gestaltet ist. Die Rückseite der Schutzhaube 9, 10, 11 ist oberhalb der Abstufungen 17 durch einen ebenen, scheibenförmigen Rückteil 17 verschlossen, der sich quer über die Breite der Schutzhaube erstreckt und bündig an die rückseitigen Kanten der Seitenteile 10 und des Kopfteiles 9 anschließt. Der Rückteil 11 ist beim dargestellten Ausführungsbeispiel durch Verkleben, Verschweißen oder ähnliches einstückig mit dem Kopfteil 9 und den Seitenteilen 10 verbunden.

Bei einem nicht dargestellten erfindungsgemäßen Ausführungsbeispiel ist der Rückteil 11 von dem die Seitenteile 10 und den Kopfteil 9 bildenden einstückigen Flächengebilde getrennt und wird separat von hinten an den Tragbügel 8 des Traggestells 8, 16 angesetzt. Dieses Ausführungsbeispiel weist eine vereinfachte Herstellbarkeit auf, da das den Kopfteil 9 und die Seitenteile 10 bildende Flächengebilde aus einer ebenen Erstreckung in einfacher Weise bogenförmig gekrümmt und mit dem Traggestell 8, 16 verbunden werden kann. Das Ansetzen des Rückteiles 11 erfolgt dann unabhängig von der Festlegung dieses Flächengebildes.

Auch die Ränder der Schutzhaube 9, 10, 11 sind analog der Anordnung am Traggestell 8, 16 mit Druckknopfelementen 14b versehen, die die Gegenstücke zu den Druckknopfelementen 14a darstellen. Die Schutzhaube ist somit in einfacher Weise auf das Traggestell 8, 16 aufsetzbar und mittels der Druckknopfelemente 14a, 14b an diesem festlegbar. Bei anderen Ausführungsbeispielen sind andere Arten von lösbaren Befestigungsmitteln vorgesehen, um die Schutzhaube an dem Traggestell festzulegen.

Die Windschutzvorrichtung 6 nach Fig. 4 entspricht im wesentlichen der zuvor beschriebenen Windschutzvorrichtung 6. Um die Hindurchführung eines Dreipunkt-Sicherheitsgurtes 18 durch die Aussparungen 15 zu ermöglichen und gleichzeitig einen Beckengurtteil des Dreipunkt-Sicherheitsgurtes 18 am Traggestell 8, 16 positionszusichern, ist am Tragbügel 8 des Traggestells 8, 16 ein Klappbügel 19 vorgesehen, der für die Hindurchführung des Dreipunkt-Sicherheitsgurtes 18 aufklappbar und anschließend unter Umschließung des Beckengurtteiles wieder in seine geschlossene Position am Tragbügel 8 zurückklappbar ist. Der Dreipunkt-Sicherheitsgurt 18 ist durch einen an sich bekannten Fangtisch 20 zur gegenüberliegenden Seite geführt, der der Sitzposition des Kindersitzes 4 zugeordnet ist.

## Patentansprüche

1. Windschutzvorrichtung für einen in einem Kraftfahrzeug in Fahrtrichtung ausrichtbaren Kindersitz mit einer dem Kindersitz zustellbaren Schutzhaube, wobei die Schutzhaube einen den Kindersitz (4) oben über seine Breite überspannenden Kopfteil (9), zwei bündig an den Kopfteil (9) anschließende und den Kindersitz (4) außen zumindest über einen Teil seiner Höhe seitlich flankierende Seitenteile (10) sowie einen sich - in Fahrtrichtung gesehen - hinter dem Kindersitz (4) bündig zwischen dem Kopfteil (9) und den Seitenteilen (10) erstreckenden Rückteil (11) aufweist, **dadurch gekennzeichnet, daß** sowohl die Seitenteile (10) als auch der Kopfteil (9) und der Rückteil (11) als zumindest weitgehend formstabile Flächengebilde gestaltet sind, und daß die Schutzhaube mit einem Traggestell (8, 16) versehen ist, das fahrzeugfest oder kindersitzfest montierbar ist.

2. Windschutzvorrichtung nach Anspruch 1, **dadurch gekennzeichnet, daß** der Kopfteil (9), die Sitzteile (10) und der Rückteil (11) an dem Traggestell (18) festgelegt sind.

3. Windschutzvorrichtung nach Anspruch 1 oder 2, **dadurch gekennzeichnet, daß** die Flächengebilde (9, 10, 11) aus einem transparenten Kunststoffmaterial bestehen.

4. Windschutzvorrichtung nach einem der Ansprüche 1 bis 3, **dadurch gekennzeichnet, daß** die Seitenteile (10) und der Kopfteil (9) als ein einstückiges, bogenförmig gekrümmtes Flächengebilde gestaltet sind.

5. Windschutzvorrichtung nach wenigstens einem der vorhergehenden Ansprüche, **dadurch gekennzeichnet, daß** die Flächengebilde (9, 10, 11) mit Hilfe von lösbaren Befestigungsmitteln (14a, 14b) an dem Traggestell (8, 16) festlegbar sind.

6. Windschutzvorrichtung nach Anspruch 5, **dadurch gekennzeichnet, daß** als lösbare Befestigungsmittel Druckknopfanordnungen (14a, 14b) vorgesehen sind.

7. Windschutzvorrichtung nach wenigstens einem der vorhergehenden Ansprüche, **dadurch gekennzeichnet, daß** das Traggestell (8, 16) lösbare Halterungen (12, 13) zur Festlegung des Traggestells (8, 16) am Kindersitz (4, 7) oder an fahrzeugfesten Gurten (5, 18) aufweist.

8. Windschutzvorrichtung nach Anspruch 7, **dadurch gekennzeichnet, daß** im Bereich der Seitenteile (10) Aussparungen (15) zur Hindurchführung eines fahrzeugseitigen Sicherheitsgurtes (18) für den Kindersitz (4, 7) vorgesehen sind.

9. Windschutzvorrichtung nach Anspruch 8, **dadurch gekennzeichnet, daß** die Kanten der Aussparungen (15) abgerundet sind.

10. Windschutzvorrichtung nach wenigstens einem der vorhergehenden Ansprüche, **dadurch gekennzeichnet, daß** das Traggestell (8, 16) mit einem entsprechend den Rändern der Flächengebilde (9, 10, 11) verlaufenden Rohrrahmen (16) versehen ist.

11. Windschutzvorrichtung nach wenigstens einem der vorhergehenden Ansprüche, **dadurch gekennzeichnet, daß** der Schutzhaube Justiermittel zur Höhenverstellung der Schutzhaube relativ zu dem Fahrzeugsitz oder dem Kindersitz zugeordnet sind.

12. Windschutzvorrichtung nach wenigstens einem der vorhergehenden Ansprüche, **dadurch gekennzeichnet, daß** das Traggestell aus wenigstens zwei Gestellteilen, insbesondere Rohrabschnitten, lösbar zusammengefügt ist.

## Claims

1. Wind barrier for a children seat adjustable in the direction of motion of an automotive vehicle with a protective hood adjoinable to the children seat, the protective hood having a head portion (9) spanning the children seat (4) on top over its width, two side portions (10) flush adjacent to the head portion (9) and laterally flanking the children seat (4) outside at least over a portion of its height as well as a back portion (11) extending - seen in the direction of motion - behind the children seat (4) flush between the head portion (9) and the side portions (10), **characterized in that** both the side portions (10) and the head portion (9) and the back portion (11) are designed as at least largely dimensionally stable sheets, and that the protective hood is provided with a support frame (8, 16) which is mountable secured to the vehicle or secured to the children seat.

2. Wind barrier according to claim 1, **characterized in that** the head portion (9), the side portions (10) and the back portion (11) are fixed to the support frame (18).

3. Wind barrier according to claim 1 or 2, **characterized in that** the sheets (9, 10, 11) are composed of a transparent plastics material.

4. Wind barrier according to any of claims 1 to 3, **characterized in that** the side portions (10) and the head portion (9) are designed as a one-piece, arcuate curved sheet.

5. Wind barrier according to at least one of the preceding claims, **characterized in that** the sheets (9, 10, 11) are fixable to the support frame (8, 16) by means of releasable fasteners (14a, 14b).

6. Wind barrier according to claim 5, **characterized in that** snap fasteners (14a, 14b) are provided as releasable fasteners.

7. Wind barrier according to at least one of the preceding claims, **characterized in that** the support frame (8, 16) includes releasable fixings (12, 13) for fixing the support frame (8, 16) to the children seat (4, 7) or to belts (5, 18) secured to the vehicle.

8. Wind barrier according to claim 7, **characterized in that** in the vicinity of the side portions (10) are provided recesses (15) for passing a vehicle seat belt (18) for the children seat (4, 7).

9. Wind barrier according to claim 8, **characterized in that** the edges of the recesses (15) are rounded.

10. Wind barrier according to at least one of the preceding claims, **characterized in that** the support frame (8, 16) includes a tubular frame (16) extending along the edges of the sheets (9, 10, 11).

11. Wind barrier according to at least one of the preceding claims, **characterized in that** the protective hood is associated with adjusting means for height adjustment of the protective hood relative to the vehicle seat or the children seat.

12. Wind barrier according to at least one of the preceding claims, **characterized in that** the support frame is releasably assembled from at least two frame portions, in particular tubular sections.

## Revendications

1. Pare-vent pour siège d'enfant ajustable en direction de course d'un véhicule automobile avec un capot de protection ajoutable au siège d'enfant, le capot de protection comprenant une section de tête (9) enjambant le siège d'enfant (4) en haut sur son largeur et deux sections latérales (10) à fleur de la section de tête (9) joingnant et alignée latéralement au siège d'enfant à l'extérieur sur au moins une section de son hauteur ainsi qu' une section arrière (11) s'étendant - dans la direction de course - en arrière du siège d'enfant (4) à fleur de la section de tête (9) et les sections latérales (10), **caractérisé en ce que** les deux sections latérales (10) et la section de tête (9) et la section arrière (11) sont configurées en au moins largement indéformable plats, et en se que le capot de protection est pourvu d'un support (8, 16), lequel est montable fixé au véhicule ou fixé au siège d'enfant.

2. Pare-vent selon la revendication 1, **caractérisé en ce que** la section de tête (9), les sections latérales (10) et la section arrière (11) sont fixés au support (18).

3. Pare-vent selon la revendication 1 ou 2, **caractérisé en ce que** les plats (9, 10, 11) sont composés de matière plastique transparente.

4. Pare vent selon l'une des revendications 1 à 3, **caractérisé en ce que** les sections latérales (10) et la section de tête (9) sont configurées d'une seule partie en plats courbés en arc.

5. Pare vent selon au moins une des revendications précédentes, **caractérisé en ce que** les plats (9, 10, 11) sont fixables au support (8, 16) par l'intermédiaire de fixatifs détachables (14a, 14b).

6. Pare-vent selon la revendication 5, **caractérisé en ce que** pour fixatifs détachables sont pourvus arrangements de boutons-pression (14a, 14b).

7. Pare vent selon au moins une des revendications précédentes, **caractérisé en ce que** le support (8, 16) est pourvu d'attaches détachables (12, 13) pour la fixation du support (8, 16) au siège d'enfant (4, 7) ou à ceintures (5, 18) fixées au véhicule.

8. Pare-vent selon la revendication 7, **caractérisé en ce que** dans le rayon des sections latérales (10) sont pourvus d'évidements (15) pour passage d'une ceinture de sécurité (18) fixée au véhicule pour le siège d'enfant (4, 7).

9. Pare-vent selon la revendication 8, **caractérisé en ce que** les bords des évidements (15) sont arrondés.

10. Pare vent selon au moins une des revendications précédentes, **caractérisé en ce que** le support (8, 16) est pourvu d'une châssis tubulaire (16) s'étendant selon les bords des plats (9, 10, 11).

11. Pare vent selon au moins une des revendications précédentes, **caractérisé en ce que** le capot de protection est associé à moyens d'ajustage pour l'ajustage d'altitude du capot de protection relatif au siège de véhicule ou au siège d'enfant.

12. Pare vent selon au moins une des revendications précédentes, **caractérisé en ce que** le support est assemblé et démontable d'au moins deux parties de support, en particulier sections tubulaires.
